# EUROPEAN PATENT SPECIFICATION

(11) **EP 3 626 492 B1**
(45) Date of publication and mention of the grant of the patent: **03.11.2021**
(21) Application number: 18195797.8
(22) Date of filing: 20.09.2018
(51) Int. Cl.: B60H 1/32

(54) **UNDERMOUNT CONDITIONING UNIT**
UNTERBAUKONDITIONIEREINHEIT
UNITÉ DE CONDITIONNEMENT ENCASTRABLE

(43) Date of publication of application: 25.03.2020
(73) Proprietor: Zanotti S.p.A., 46020 Pegognaga (IT)
(72) Inventor: SFRAGARA, Massimiliano, 46020 PEGOGNAGA (IT); TOTARO, Matteo, 46020 PEGOGNAGA (IT); VENTURINI, Luca, 46020 PEGOGNAGA (IT)
(74) Representative: Porta & Consulenti Associati S.p.A.

(56) References cited:
- EP-A2- 2 072 299
- WO-A1-2014/047401
- JP-B2- 3 163 734

## Description

### Technical field

The present invention relates to an undermount conditioning unit.

In particular, the present invention relates to an undermount conditioning unit designed for being mounted underneath a chassis of a vehicle for temperature conditioning of the transported cargo.

### Background art

Vehicles such as trucks, tractor and trailer and vans are frequently used for transporting cargo that need to be maintained at controlled temperature in order to avoid cargo deterioration during transportation.

Typically, such vehicles comprise a conditioned cargo box that is maintained at a predetermined temperature by a conditioning unit mounted to the vehicle at a location on the front of the cargo box of underneath the cargo box.

Conditioning units mounted underneath the cargo box are often referred to as undermount conditioning unit, while conditioning units mounted on the front of the cargo box are often referred to as nosemount transport conditioning unit.

Undermount conditioning units typically comprise a case into which a compressor, an air-cooled condenser, one or more fans a filter-drier and a plurality of connecting conduits are mounted. In the compressor a refrigerant gas is compressed to a higher temperature and pressure. Compressed refrigerant gas then moves to the air-cooled condenser where air flowing across a group of condenser coil fins and tubes cools the gas to its saturation temperature. The air flow across the condenser is energized by fans powered by relevant electric motors. By removing latent heat, the gas condenses to a high pressure/low temperature liquid and flows through a filter-drier that keeps refrigerant clean and dry. The high pressure/low temperature liquid then flows toward an expansion valve and an evaporator positioned outside the undermount unit and positioned at the cargo box. As the condensed liquid passes through the expansion valve, some of it vaporizes into a gas and flows in the evaporator. Air from the cargo box flows over the evaporator and the remaining condensed liquid absorbs heat from the flowing air and is vaporized. Evaporator fans energize the air flowing over the evaporator and introduce the conditioned air into the cargo box.

In order to reduce the size of the undermount units, the compressor of the undermount conditioning units is typically an electric powered compressor and is powered by a dedicated alternator connected, by a transmission belt, to the traction engine of the vehicle. The dedicated alternator is stored into the traction engine compartment and converts the mechanical power of the traction engine of the vehicle to electrical power suitable for energizing the compressor and the condenser fans.

Document EP 2072299 A2 discloses an example of an undermount conditioning unit.

### Summary of the invention

The Applicant has observed that the undermount conditioning units above briefly disclosed present some drawbacks.

In fact, the speed of the dedicated alternator is directly linked to the rotational speed of the traction engine of the vehicle. In some circumstances, the rotational speed of the traction engine does not allow the alternator to produce sufficient electrical power for energizing the compressor.

The Applicant has indeed noted that when the vehicle stops, for example due to traffic jam, the traction engine rotates at a minimum rpm and thus the alternator produces a low level of electricity. Thus, in case the temperature of the cargo box need to be lowered, the alternator is not able to produce sufficient electric power

The Applicant has observed that this can put the quality of the cargo at risk.

The Applicant has further noted that when the vehicle is parked with the traction engine turned off while the cargo box need to be cooled, the traction engine must be turned on for powering the alternator.

The Applicant has observed that this causes high level of fuel consumption and, especially, high level of pollution.

Moreover, in accordance with antipollution law of some states regarding idling, the traction engine must be off when the vehicle is parked and cannot be turned on until the vehicle started up again.

The Applicant has thus tackled the problem of ensuring adequate cargo temperature, low pollution emission and possibly low fuel consumption of the undermount transport conditioning unit.

Consistently, the present invention relates to a undermount conditioning unit comprising:
a supporting frame defining a containment volume and configured for being mounted to a vehicle chassis at a position beneath the vehicle;
an internal combustion engine supported by the supporting frame in the containment volume;
an electric generator driven by the internal combustion engine and electrically connected to a power converter assembly, the electric generator and the power converter assembly being supported by the supporting frame in the containment volume;
a compressor, comprising an electric compressor motor powered by the power converter assembly, wherein the compressor is supported by the supporting frame in the containment volume;
a condenser fluidly connected to the compressor and supported by the supporting frame in the containment volume;
a water cooling circuit comprising a heatsink assembly thermally coupled to the power converter assembly and a liquid to air exchanger, the water cooling circuit being supported by the supporting frame in the containment volume;
a fan assembly active on the liquid to air exchanger for moving air onto the liquid to air exchanger.

By providing the undermount conditioning unit with a dedicated internal combustion engine different from the traction engine of the vehicle, adequate cargo temperature can be ensured at all times, fuel consumption and level of pollution can be reduced.

The Applicant has perceived that a dedicated internal combustion engine and a dedicated electric generator, when stored into the case of the undermount conditioning unit, need to accurately select the components to be mounted into the case in order to avoid excessive dimension of the undermount unit that can result in an undermount unit unsuitable for being mounted beneath the vehicle.

However, the Applicant has noted that selecting electrical components on the basis of their dimension to performance properties could result in electrical components having different technical standards in terms of power supply.

The Applicant has perceived that by providing the undermount unit with a power converter assembly that converts electric energy from one form to another, the electrical energy generated by the electric generator can be properly distributed to each electrical component.

The Applicant has noted that a power converter assembly can suffer from overheating when mounted into a undermount conditioning unit, since a power converter assembly requires great quantity of fresh air to be cooled. Due to the position of the undermount unit (i.e. beneath the vehicle and between the wheels of the vehicle) small amount of fresh air can enter the case of the undermount unit, so limiting the power converter assembly cooling.

By providing the undermount unit with a water cooling circuit comprising a heatsink assembly thermally coupled to the power converter assembly and a liquid to air exchanger, the power converter assembly can be properly cooled without the need of conveying fresh air directly onto the same.

Throughout this description and in the following claims, the expressions "outermost" (or outer) and "innermost" (or inner) are used to indicate positions inside the containment volume that are referred to a geometric centre of the containment volume; in particular, such expressions respectively indicate positions further away from and closer to the geometric centre of the containment volume.

Throughout this description and in the following claims, the expressions "water cooling circuit" is used to indicate a circuit wherein any suitable liquid mixture and/or solution is used as an heat conductor. Such a suitable liquid mixture and/or solution is not limited to water.

Hereinbelow, preferred features of the undermount conditioning unit according to the present invention are described, which can be provided singularly or in combination, according to the claims.

Preferably, the liquid to air exchanger is positioned in front of the condenser at a outermost position of the containment volume; said fan assembly being also active on the condenser.

The Applicant has perceived that this configuration allows to maximize the cooling effect of the fan assembly and minimize the dimension of the undermount unit. Indeed, in order to properly cool down the power converter assembly the temperature set point of the coolant of the water cooling circuit is preferably comprised between 40 °C and 65 °C, more preferably is about 50 °C. By contrast, the temperature in the condenser can be great with respect to the temperature of the coolant of the water cooling circuit.

The Applicant has noted that by exposing the liquid to air exchanger of the water cooling circuit to fresh air (i.e. by providing the liquid to air exchanger of the water cooling circuit at a outermost position of the containment volume) and by positioning the condenser behind the liquid to air exchanger, fresh air sucked by the fan assembly firstly passes through the liquid to air exchanger and then passes through the condenser. Fresh sucked air thus cools down the coolant flowing into the liquid to air exchanger and increases its temperature to values that are still suitable for a properly cooling the condenser.

Preferably, it is provided an engine radiator for cooling the internal combustion engine supported by the supporting frame in the containment volume; said fan assembly being also active on said engine radiator.

In other words, the same fan assembly can be used for moving air through both the engine radiator and the liquid to air exchanger, so cooling both the coolant of the water cooling circuit and the coolant (or oil) of the internal combustion engine. This further reduces the dimension of the undermount unit.

Preferably, the engine radiator is positioned in front of the condenser.

Preferably, the liquid to air exchanger is at a outermost position of the containment volume, the condenser is at a innermost position of the containment volume and the engine radiator is positioned between the condenser and the liquid to air exchanger, said fan assembly being also active on the condenser.

The Applicant has observed that the condenser can be cooled at temperature higher than the coolant flowing into the engine radiator and can be thus positioned behind the engine radiator, so allowing the same fan assembly to act onto the liquid to air exchanger, the engine radiator and the condenser.

Alternatively, the liquid to air exchanger and the engine radiator are positioned side by side or are superposed each other vertically, said fan assembly being also active on the condenser and the condenser being positioned at a innermost position in the containment volume.

The Applicant has observed that the dimensions of the engine radiator and of the liquid to air exchanger can be selected so that the sum of their frontal area is substantially equal to the frontal area of the condenser.

Preferably, the frontal area of the engine radiator, namely the area of the engine radiator facing the environment external to the containment volume, is at least 2 times the frontal area of the liquid to air exchanger, more preferably 3 times the frontal area of the liquid to air exchanger, more preferably 4 times the frontal area of the liquid to air exchanger.

The Applicant has perceived that a further reduction in the undermount unit dimension can be obtained by positioning side by side or by superposing each other the engine radiator and the liquid to air exchanger. In such a configuration, the fan assembly preferably acts on both the engine radiator and the liquid to air exchanger.

Preferably, the liquid to air exchanger, the condenser and the engine radiator are mounted into a common housing having a venting aperture provided with a grille.

Preferably, the fan assembly is mounted at the housing on an opposite side with respect to the venting aperture.

Preferably, the fan assembly comprises a plurality of axial blowers, more preferably two blowers, positioned side by side.

Preferably, the compressor, the condenser, the liquid to air exchanger, the engine radiator and said fan assembly are positioned into a first compartment of said containment volume and the internal combustion engine and the electric generator are positioned into a second compartment of said containment volume.

This allows to separate the components designed for producing power, such as the internal combustion engine and the electric generator, from the components designed for conditioning the cargo box. The maintenance of the undermount unit is therefore simplified.

Preferably, the power converter assembly is mounted on a movable support, the movable support being movable from a first position, where the power converter assembly is positioned inside the containment volume, and a second position, where the power converter assembly is positioned at least partially outside the containment volume.

The Applicant has noted that the power converter assembly comprises the most electronic circuit boards and therefore it can be subjected to a more intensive maintenance. By providing the power converter assembly at least partially extractable from the containment volume, the electronic circuit boards thereof can be easily accessed.

Preferably, the movable support divides the first compartment from the second compartment. In other words, the movable support is provided between the components designed for producing power and the components designed for conditioning the cargo box.

Preferably, the electric generator is directly mounted on the internal combustion engine; the internal combustion engine and the electric generator sharing the same transmission shaft. In other words, the internal combustion engine and the electric generator are integrally mounted so as to minimize their overall dimension.

Preferably, the power converter assembly comprises a AC/DC rectifier electrically connected to the electric generator for converting an AC current generated by the electric generator to a DC current and a DC/AC inverter electrically connected to the AC/DC rectifier for converting the DC current to an AC current suitable for powering the electric compressor motor.

Preferably, the power converter assembly further comprises a DC/DC converter electrically connected to the AC/DC rectifier for converting the DC current to DC current suitable for powering the fan assembly.

By this power converter assembly, the AC current generated by the electric generator is rectified into a DC current preferably at high voltage (for example at 600V). The high voltage DC current is fed to a high voltage DC bus for being further converted to meet the specific requirements of each electrical load. As an example, a DC/AC inverter can be connected to the high voltage DC bus for properly energizing the electric compressor motor.

Preferably, the voltage level in the high voltage DC bus is constantly monitored and kept constant by a suitable control system acting on the internal combustion engine throttle, in order to ensure that the electrical loads can properly operate.

The high voltage DC bus further allows to provide power sources different from the internal combustion engine for powering the electrical loads, such as battery, photovoltaic solar panels and shore supply, provided that each of the different power sources is electrically connected to the high voltage DC bus through a suitable converter for converting the incoming electrical current into a high voltage DC.

### Brief description of the drawings

The present invention will be now described more in detail hereinafter with reference to the accompanying drawings, in which some, but not all embodiments of the invention are shown.

For the purpose of the present description and of the appended claims, use of the "a" or "an" are employed to describe elements and components of the invention. This is done merely for convenience and to give a general sense of the invention. This description should be read to include one or at least one and the singular also includes the plural unless it is obvious that it is meant otherwise.

For the purpose of the present description and of the appended claims, except where otherwise indicated, all numbers expressing amounts, quantities, percentages, and so forth, are to be understood as being modified in all instances by the term "about". Also, all ranges include the maximum and minimum points disclosed and include any intermediate ranges therein, which may or may not be specifically enumerated herein.
- Figure 1 shows a perspective view of a undermount conditioning unit according to the present invention;
- Figure 2 shows another perspective view of the undermount conditioning unit of Figure 1;
- Figure 3 shows a further perspective view of the undermount conditioning unit of Figure 1 with some component excised for sake of clarity;
- Figure 4 shows a perspective view of some components of the undermount conditioning unit of Figure 1;
- Figure 5 shows a section view along the plane V-V of the undermount conditioning unit of Figure 3;
- Figure 6 shows a section view along the plane VI-VI of the undermount conditioning unit of Figure 3;
- Figure 7 shows a top view of the undermount conditioning unit of Figure 1 in a maintenance condition;
- Figure 8 is a schematic view of some components of the undermount conditioning unit of the present invention.

### Detailed description

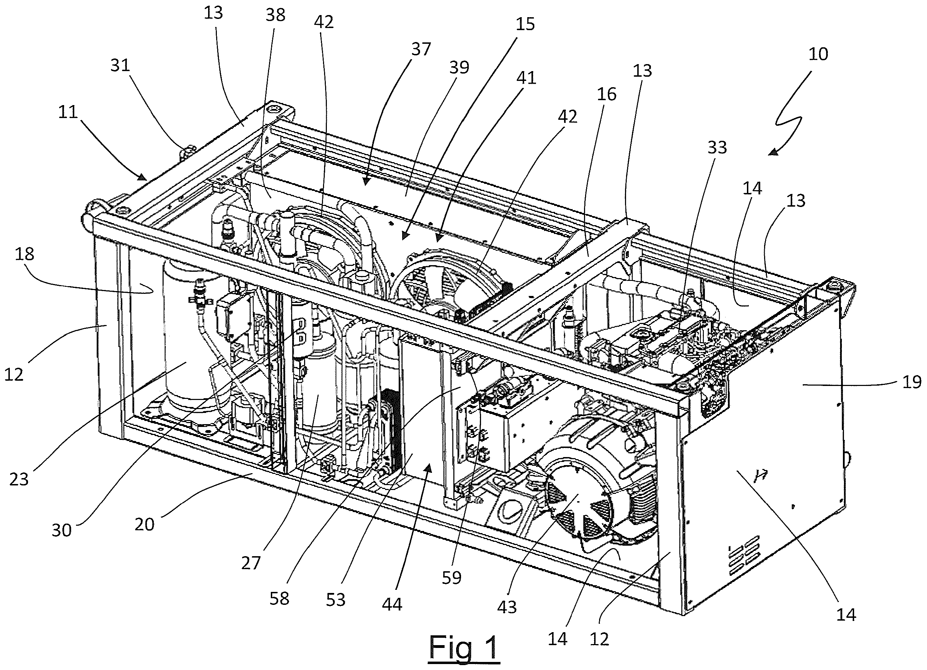

A undermount conditioning unit according to the present invention is indicated with the reference number 10 in Figure 1.

The undermount unit 10 is suitable for being mounted underneath the chassis of a vehicle, preferably between the wheels of the vehicle.

As illustrated on Figure 1, the undermount unit 10 comprises a frame 11 constituted by uprights 12 and crossbeam 13 that form a substantially parallelepiped structure.

A plurality of covering panels 14 are mounted to the frame 11 so as to close the parallelepiped structure and define a containment volume 15. The covering panels 14 can be mounted and dismounted from the frame 11 in order to gain access to the interior of the containment volume 15 when necessary.

The undermount unit 10 has a top 16, a bottom 17, a front side 18, a rear side 19 and left 20 and right sides 21. The terms "front", "rear", "left" and "right" are used for sake of description and do not imply any particular orientation of the undermount unit 10 with respect to the vehicle. On the contrary, the top 16 is designed for being closer to the vehicle chassis and the bottom 17 is designed for being farther from the vehicle chassis.

The covering panels 14 close the top 16, the bottom 17, the front side 18, the rear side 19, the left 20 and right sides 21 of the undermount unit 10.

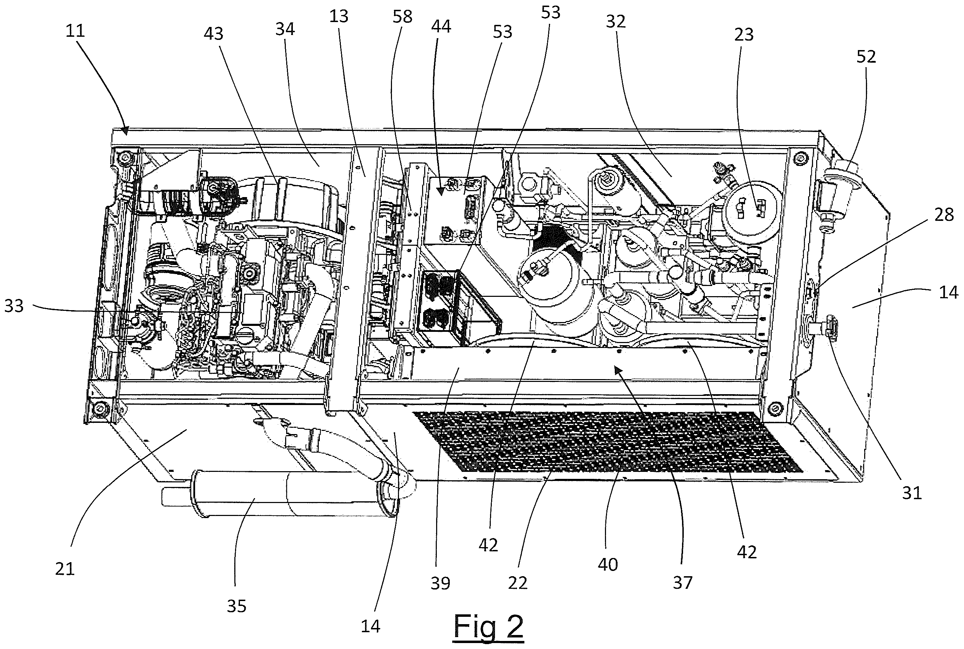

As illustrated on Figure 2, the covering panel 14 closing the right side 21 comprises a grille 22 which allows fresh air to enter the containment volume 15. The grille 22 comprises a lattice or a cellular structure for preventing debris from entering the containment volume 15.

The undermount conditioning unit 10 is a part of a conditioning system used to condition the air of the cargo box of the vehicle.

To this end, the undermount conditioning unit 10 comprises a compressor 23 mounted on the frame 11 preferably in the proximity of the front side 18 and the left side 20 of the undermount unit 10 (see Figures 1, 2 and 3). The compressor 23 is a scroll compressor having an integral electric motor 24 inside the body of the compressor 23. The choice of a scroll compressor is due to the fact that it is very compact and smooth running and do not require spring suspension when compared to other types of compressor such as piston compressor.

The compressor 23 is fluidly connected through a discharge port 25 to a condenser 26, so as to condense the hot and compressed refrigerant vapour.

In the preferred embodiment of the invention, the discharge port 25 of the compressor 23 is not directly connected to the condenser 26; the compressed refrigerant preferably passes through an oil separator 27, for avoiding oil dispersed into the compressed refrigerant to flow into the various component of the conditioning system, before entering the condenser 26.

The condenser 26 is a flat condenser coil. The condenser 26 is preferably a finned pack heat exchanger wherein the compressed refrigerant flows through a serpentine that is inserted into a pack of parallel fins. The compressed refrigerant transfer heat to the serpentine that, in turn, transfers heat to the fins. The fins are cooled by air.

The condenser 26 is fluidly connected to a delivery port 28 positioned at a side of the undermount unit 10 (in the illustrated embodiment positioned at the front side 18). The delivery port 28 is designed for being coupled to a tubing that, from the undermount unit 10 reaches the cargo box for allowing the condensed and pressurized refrigerant to flow through an expansion valve and through an evaporator. The tubing, the expansion valve and the evaporator are not shown since, preferably, they are not part of the undermount unit 10. In particular, the evaporator is typically positioned on a wall of the cargo box, while the expansion valve can be positioned in the proximity of the evaporator, so outside the undermount unit 10 (as in the preferred embodiment) or inside the undermount unit 10.

In the preferred embodiment of the invention, the condenser 26 is not directly connected to the delivery port 28; the condensed and pressurized refrigerant preferably passes through further devices before reaching the delivery port 28 for ensuring a proper treatment of the pressurised refrigerant. As an example, the condensed and pressurized refrigerant exiting form the condenser 26 passes through a liquid receiver 29, which acts as a buffer, then passes through a filter drier 30, to trap and contain moisture and contaminants, and then reaches the delivery port 28.

The undermount unit 10 further comprises an intake port 31 for allowing the refrigerant exiting from the evaporator to enter the compressor 23 and restarting the refrigeration cycle.

As stated, the above components of the undermount unit 10 are suitable for conditioning the cargo box. Such components, namely the compressor 23 the condenser 26 and the described possible further devices, are contained into a first compartment 32 of the containing volume 15. The first compartment 32 is delimited by a portion of covering panels 14 positioned at the bottom 17, the top 16, the left 20 and right side 21, as well as the covering panel 14 positioned at the front side 18.

The undermount unit 10 further comprises power generation devices for energizing all the electrical components of the undermount unit 10.

In particular, it is provided an internal combustion engine 33, preferably a diesel engine, positioned into a second compartment 34 of the containment volume 15. The second compartment 34 is adjacent to the first compartment 32 and is delimited a portion of covering panels 14 positioned at the bottom 17, the top 16, the left 20 and right side 21, as well as the covering panel 14 positioned at the rear side 19. The first compartment 32 is divided by the second compartment 34 by a crossbeam 13 positioned at the top 16.

The internal combustion engine 33 is mounted transversally into the frame 11, namely it extends from the right side 21 to the left side 20. In particular, on the covering panel 14 at the right side 21 is provided an aperture for allowing an exhaust pipe 35 of the engine 33 to exit from the frame 11.

The internal combustion engine 33 is connected to a radiator 36 positioned into the first compartment 32 of the containment volume 15. In the preferred embodiment, the internal combustion engine 33 is water cooled, namely it is cooled by a closed circuit carrying liquid coolant through channels in the engine block and cylinders head. The liquid coolant is routed to the radiator 36 and then back to the engine once cooled.

The radiator 36 is preferably a finned pack heat exchanger wherein the liquid coolant flows through a serpentine that is inserted into a pack of parallel fins.

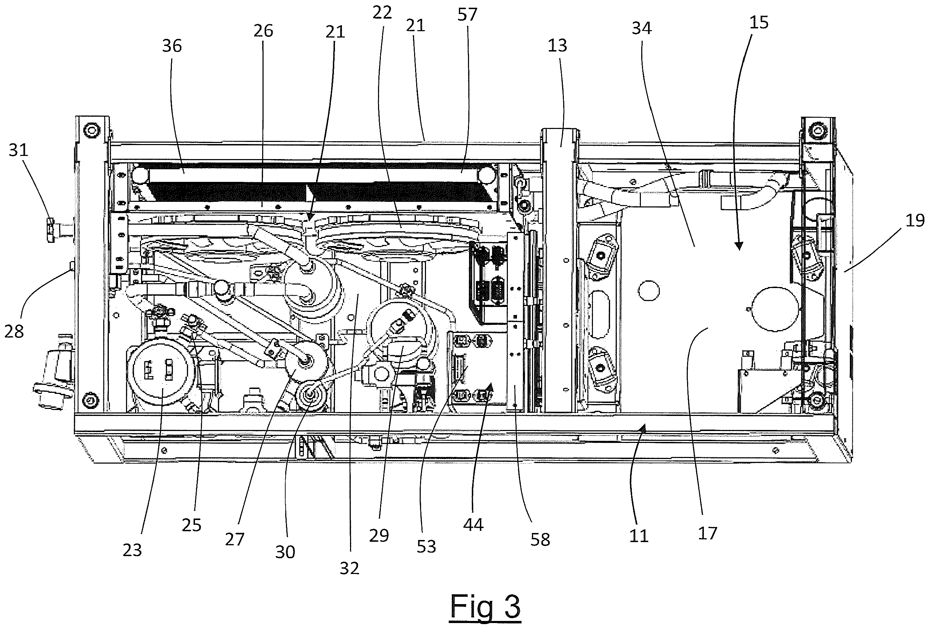

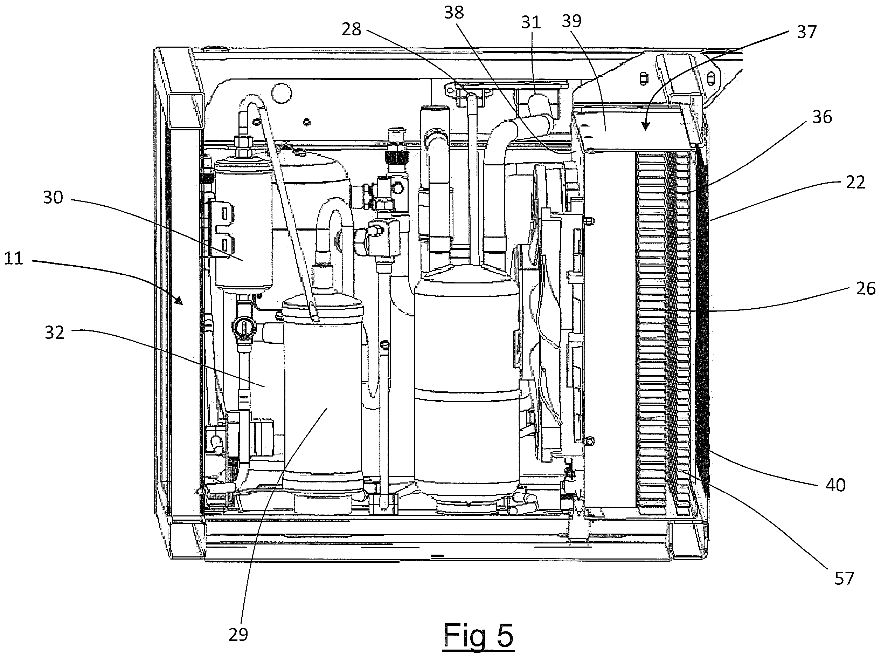

As illustrated on Figures 3, 4 and 5, the radiator 36 is positioned in front of the condenser 26. In particular, the radiator 36 is at a outermost position and the condenser 26 is at a innermost position of the containment volume 15. The radiator 36 and the condenser 26 are placed at the right side 21 of the frame 11.

Both the radiator 36 and the condenser 26 are mounted into a common housing 37. The housing 37 comprises a inner wall 38, a top wall 39 and two sides walls, so as to contain both the radiator 36 and the condenser 26. The housing 37 presents a venting aperture 40 opposite to the inner wall 38 for allowing fresh air to enter the housing 37 and to reach the radiator 36 and the condenser 26. The venting aperture 40 is closed by the grille 22 provided in the covering panel 14 positioned at the right side 21.

A fan assembly 41, in the form of a couple of axial blower 42 having an integral DC electric motor 42a is attached to the housing 37. In particular, each axial blower 42 is connected to the inner wall 38 of the housing 37. To this end, the inner wall 38 presents two apertures through which the blowers act.

Each axial blower 42 has blades that force air to move parallel to a shaft about which the blades rotate.

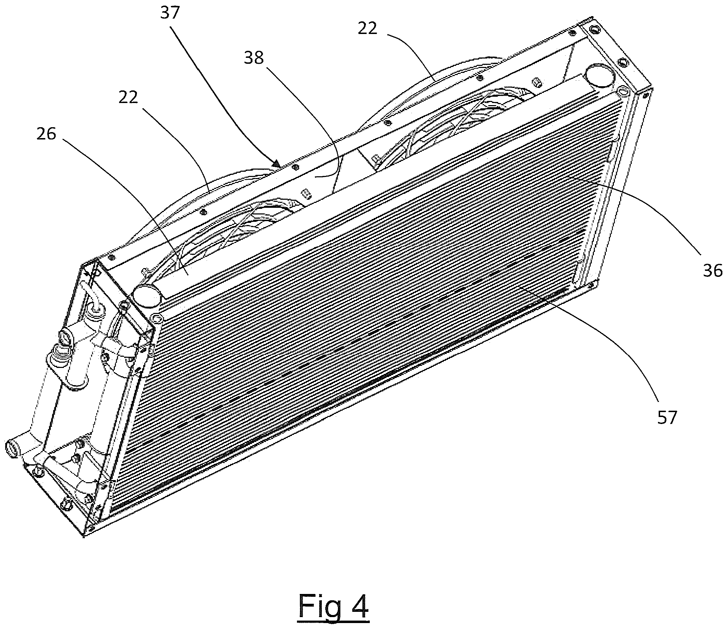

The fan assembly is operative on both the radiator 36 of the engine 33 and the condenser 26. In particular, the fan assembly 41 directly faces the condenser 26 which, in turn, directly faces the engine radiator 36, as for example illustrated on Figure 4.

The fan assembly 41 helps moving air through the condenser 26 and the radiator 36 in order to cause the compressed refrigerant in the condenser 26 and the cooling liquid in the radiator 36 to cool. More specifically, air entering the venting opening 40 through the grille 22 circulates around the fins of the condenser and the fins of the radiator cooling the same.

Fresh air moved by the fan assembly 41 firstly flows over the fins of the engine radiator 36 and then reaches the fins of the condenser 26. Therefore, the cooling effect of the fresh air is maximum at the engine radiator 36, since the air that flows over the condenser has been heated by the engine radiator 36.

The mechanical power of the internal combustion engine is transformed into electrical power by an electric generator 43. The electric generator 43 is preferably a AC synchronous permanent magnet type. The transmission shaft of the internal combustion engine 33 is the drive shaft of the electric generator 43, so that neither a transmission pulley nor any other type of transmission device is interposed between the internal combustion engine 33 and the electric generator 43. In other words, the internal combustion engine 33 and the electric generator 43 are integrally mounted and realize an unitary unit.

The electrical power generated by the electric generator 43 is used for energizing the compressor motor 24 and the DC electric motor 42a of the axial blowers 42, as well for energizing any other electrical device of the undermount unit 10.

To this end, the electric generator 43 is not directly coupled to the electric loads, such as the compressor motor 24, of the undermount unit 10. On the contrary, the electric generator 43 is electrically connected to a power converter assembly 44 that converts the AC current provided by the electric generator 43 into a DC current.

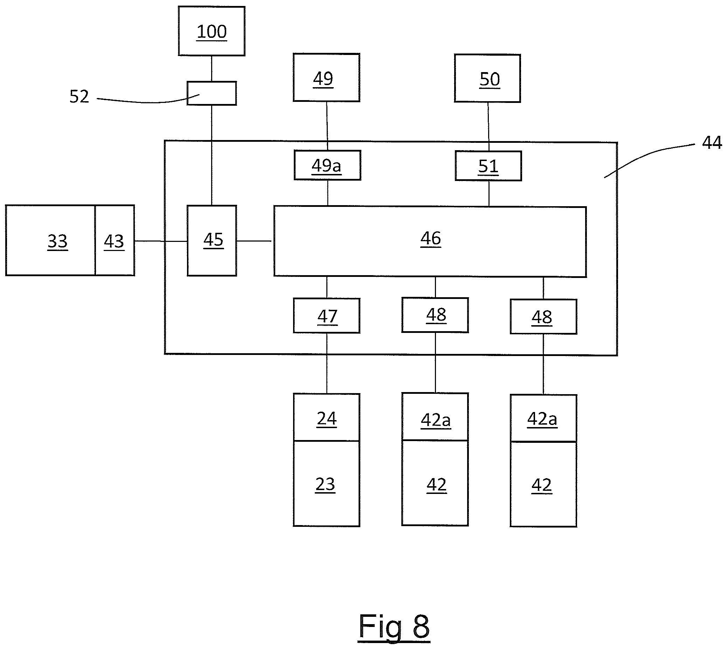

In particular, the power converter assembly 44 comprises a AC/DC rectifier 45 electrically connected to the electric generator 43 for converting the AC current generated by the electric generator 43 to a DC current, as schematically illustrated on Figure 8.

The AC/DC rectifier 45 converts the AC current into a high DC current having a voltage comprised between 400V and 800V, preferably of 600V.

The power converter assembly 44 further comprises a high voltage DC bus 46 electrically connected to the AC/DC rectifier 45. The high voltage DC bus 46 powers all the electrical loads of the undermount unit 10.

In particular, the power converter assembly 44 comprises a DC/AC inverter 47 connected to the high voltage DC bus 46 (and thus to the AC/DC rectifier 45) for powering the compressor motor 24. The power converter assembly 44 further comprises a DC/DC converter 48 electrically connected to the high voltage DC bus 46 for converting the high voltage DC current to a low voltage DC current (for example to 24V) for powering the electric DC motors 42a of the blowers 42.

The voltage level of the high voltage DC bus 46 can be kept constant by a suitable control system (not shown) acting on the internal combustion engine throttle.

The high voltage DC bus 46 can be also connected to other electrical power sources different from the electric generator 43, as schematically illustrated on Figure 8. As an example, photovoltaic solar panels 49 can be mounted on the top of the cargo box for producing a DC current. The photovoltaic solar panels 49 can be connected to a DC/DC converter 49a for converting the voltage from the photovoltaic solar panels 49 to the same voltage of the high voltage DC bus 46. Again, a battery pack 50 can be connected to a battery charger 51 that is connected to the high voltage DC bus 46. The battery charger 51 can charge the battery pack 50 by absorbing power from the high voltage DC bus 46 and can power the high voltage DC bus 46 with DC current from the battery pack. Moreover, the undermount unit can be provided with a AC plug 52 connectable to a shore supply 100. The AC plug 52 can be connected to the AC/DC rectifier 45 for supplying DC current to the high voltage DC bus 46.

The AC/DC rectifier 45, the high voltage DC bus 46, the DC/AC inverter 47, the DC/DC converter 48, the DC/DC converter 49a of the photovoltaic solar panels (when provided), the battery charger 51 (when provided), namely the power converter assembly 44, are preferably mounted on electronic circuit boards that are housed into one or more control box 53 positioned into the frame 11.

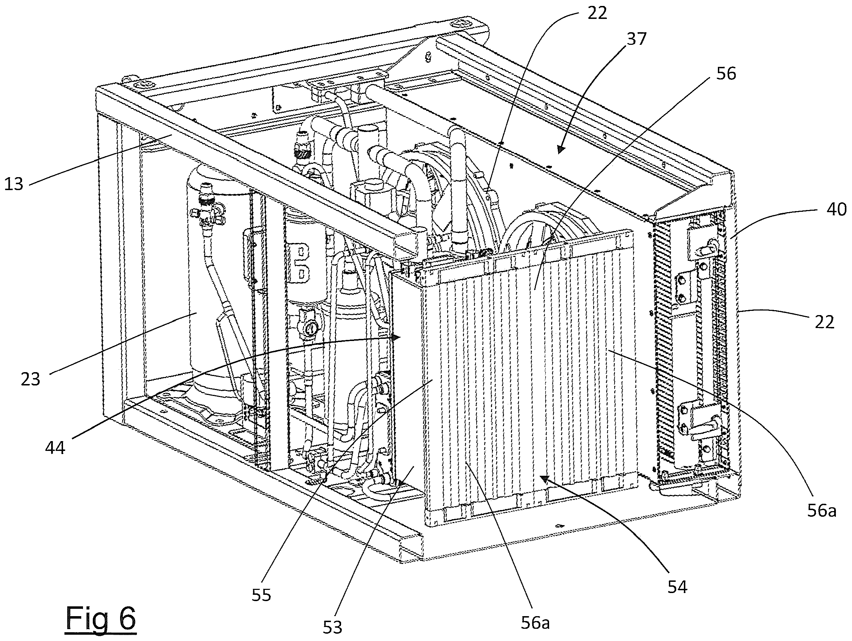

The control box 53 is water cooled by providing a heatsink assembly 54 (Figure 6) thermally coupled to the control box 53 that is preferably in direct contact with the electronic circuit boards.

The heatsink assembly 54 comprises a water block 55 having a plate 56 made from metals with high thermal conductivity such as aluminium or copper in contact with the power converter assembly 44 (i.e. with the electronic circuit boards). The water block 55 further comprises a plurality of channel or a serpentine 56a through which a coolant flows for cooling the plate 56.

The heatsink assembly 54 is fluidly connected to a liquid to air exchanger 57 positioned in front of the condenser 26. The liquid to air exchanger 57 comprises a serpentine wherein the hot coolant flows for being cooled and a pack of parallel fins designed for being exposed to the air.

The fan assembly 41 acts on the liquid to air exchanger 57 by helping moving air through the liquid to air exchanger 57 in order to cause the hot coolant to cool. More specifically, air entering the venting aperture 40 through the grille 22 circulates around the fins of the liquid to air exchanger 57 cooling the same.

In this regard, the liquid to air exchanger 57 is at a outermost position of the containment volume 15, in particular at the same position of the engine radiator 36.

In other words, the engine radiator 36 and the liquid to air exchanger 57 are both positioned in front of the condenser 26 and both face the grille 22, so that both are exposed to fresh air.

In particular, the engine radiator 36 and the liquid to air exchanger 57 are superposed each other, the engine radiator 36 being above the liquid to air exchanger 57 or the liquid to air exchanger 57 being above the engine radiator 36.

In the preferred embodiment of the invention, the engine radiator 36 and the liquid to air exchanger 57 share the same pack of parallel fins. Clearly the serpentine of the engine radiator 36 and of the liquid to air exchanger 57 are separated each other and are not in fluid communication.

The surface of the condenser 26 directed towards the venting aperture 40, namely the frontal side of the condenser 26, presents an area that is substantially equal to the sum of the areas of the surfaces of the engine radiator 36 and of the liquid to air exchanger 57 facing the venting aperture 40. The dotted line of figure 4 ideally indicates a separation between the pack of parallel fins acting on the serpentine of the engine radiator 36 and the pack of parallel fins acting on the serpentine of the liquid to air exchanger 57.

In particular, the frontal area of the engine radiator 36 is about the quadruple of the frontal area of the liquid to air exchanger 57.

The control box 53, along with the power converter assembly 44, is mounted on a movable support 58 positioned between the first compartment 32 and the second compartment 34 of the containment volume 15.

The movable support 58 is mounted on sliding guides 59 secured to the frame 11 at the crossbeam 13 positioned between the first compartment 32 and the second compartment 34.

The movable support 58 is translatable along a direction transversal to the undermount unit 10, namely in a direction extending from the right side 21 to the left side 20, between a first position and a second position.

In the first position (illustrated for example on Figure 3), the movable support 58 is completely housed into the containment volume 15 so that the control box 53, along with the power converter assembly 44, is completely inserted into the containment volume 15.

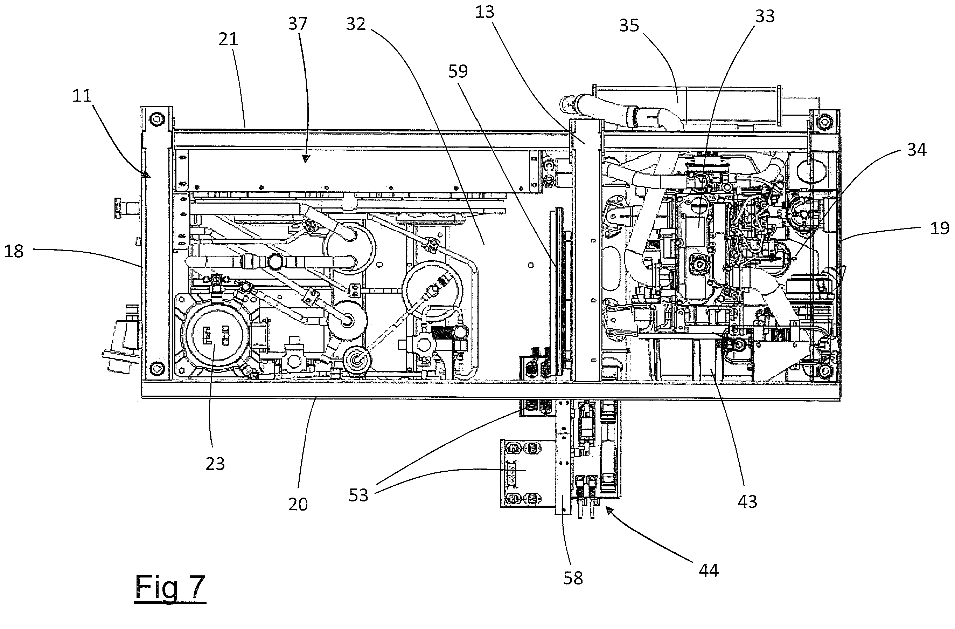

In the second position (illustrated on Figure 7), the movable support 58 is partially outside the containment volume 15 so that the control box 53, along with the power converter assembly 44, emerges from the containment volume 15. As illustrated on Figure 7, in the second position the control box 53 emerges from the left side 20 of the undermount unit 10.

## Claims

1. Undermount conditioning unit (10) comprising:
a supporting frame (11) defining a containment volume (15) and configured for being mounted to a vehicle chassis at a position beneath the vehicle;
an internal combustion engine (33) supported by the supporting frame (11) in the containment volume (15);
an electric generator (43) driven by the internal combustion engine (33), the electric generator (43) being supported by the supporting frame (11) in the containment volume (15);
a compressor (23), comprising an electric compressor motor (24), wherein the compressor (23) is supported by the supporting frame (11) in the containment volume (15);a condenser (26) fluidly connected to the compressor (23) and supported by the supporting frame (11) in the containment volume (15);
**characterized in that** the electric generator (43) is electrically connected to a power converter assembly (44) supported by the supporting frame (11) in the containment volume (15), the electric compressor motor (24) being powered by the power converter assembly (44);
and **in that** the undermount conditioning unit (10) further comprises a water cooling circuit (54, 57) comprising a heatsink assembly (54) thermally coupled to the power converter assembly (44) and a liquid to air exchanger (57), the water cooling circuit being supported by the supporting frame (11) in the containment volume (15);
a fan assembly (41) active on the liquid to air exchanger (57) for moving air onto the liquid to air exchanger (57).

2. Undermount conditioning unit (10) according to claim 1, wherein the liquid to air exchanger (57) is positioned in front of the condenser (26) at a outermost position of the containment volume (15); said fan assembly (41) being also active on the condenser (26).

3. Undermount conditioning unit (10) according to claim 1 or 2, comprising an engine radiator (36) for cooling the internal combustion engine (33) supported by the supporting frame (11) in the containment volume (15); said fan assembly (41) being also active on said engine radiator (36).

4. Undermount conditioning unit (10) according to claim 3, wherein the engine radiator (36) is positioned in front of the condenser (26).

5. Undermount conditioning unit (10) according to claims 3 and 4, wherein the liquid to air exchanger (57) is at a outermost position of the containment volume (15), the condenser (26) is at a innermost position of the containment volume (15) and the engine radiator (36) is positioned between the condenser (26) and the liquid to air exchanger (57), said fan assembly (41) being also active on the condenser (26).

6. Undermount conditioning unit (10) according to claims 3 and 4, wherein the liquid to air exchanger (57) and the engine radiator (36) are positioned side by side or are superposed each other vertically, said fan assembly (41) being also active on the condenser (26).

7. Undermount conditioning unit (10) according to any of claims from 2 to 6, wherein the liquid to air exchanger (57), the condenser (26) and the engine radiator (36) are mounted into a common housing (37) having a venting aperture (40) covered by a grille (22).

8. Undermount conditioning unit (10) according to claim 7, wherein said fan assembly (41) comprises a pair of axial blower (42) mounted side by side at the housing (37) on an opposite side with respect to the venting aperture (40).

9. Undermount conditioning unit (10) according to any of the preceding claims, wherein the compressor (23), the condenser (26), the liquid to air exchanger (57), the engine radiator (36) and said fan assembly (41) are positioned into a first compartment (32) of said containment volume (15) and the internal combustion engine (33) and the electric generator (43) are positioned into a second compartment (34) of said containment volume (15).

10. Undermount conditioning unit (10) according to any of the preceding claims, wherein the power converter assembly (44) is mounted on a movable support (58), the movable support (58) being movable from a first position, where the power converter assembly (44) is positioned inside the containment volume (15), and a second position, where the power converter assembly (44) is positioned at least partially outside the containment volume (15).

11. Undermount conditioning unit (10) according to claims 9 and 10, wherein the movable support (58) divides the first compartment (32) from the second compartment (34).

12. Undermount conditioning unit (10) according to any of the preceding claims, wherein the electric generator (43) is directly mounted on the internal combustion engine (33); the internal combustion engine (33) and the electric generator (43) sharing a same transmission shaft.

13. Undermount conditioning unit (10) according to any of the preceding claims, wherein the power converter assembly (44) comprises a AC/DC rectifier (45) electrically connected to the electric generator (43) for converting an AC current generated by the electric generator (43) to a DC current and a DC/AC inverter (47) electrically connected to the AC/DC rectifier (45) for converting the DC current to an AC current suitable for powering the electric compressor motor (24).

14. Undermount conditioning unit (10) according to claim 13, wherein the power converter assembly (44) further comprises a DC/DC converter (48) electrically connected to the AC/DC rectifier (45) for converting the DC current to DC current suitable for powering the fan assembly (41).

## Patentansprüche

1. Unterbau-Klimaanlage (10), bestehend aus:
einen Tragrahmen (11), der ein Gehäusevolumen (15) definiert und so konfiguriert ist, dass er an einem Fahrzeugchassis an einer Position unterhalb des Fahrzeugs montiert werden kann;
einen Verbrennungsmotor (33), der von dem Tragrahmen (11) in dem Gehäusevolumen (15) getragen wird;
einen von der Verbrennungskraftmaschine (33) angetriebenen elektrischen Generator (43), wobei der elektrische Generator (43) von dem Tragrahmen (11) in dem Gehäusevolumen (15) getragen wird;
einen Kompressor (23), der einen elektrischen Kompressormotor (24) umfasst, wobei der Kompressor (23) von dem Tragrahmen (11) in dem Gehäusevolumen (15) getragen wird; einen Kondensator (26), der mit dem Kompressor (23) in Fluidverbindung steht und von dem Tragrahmen (11) in dem Gehäusevolumen (15) getragen wird;
**dadurch gekennzeichnet, dass** der elektrische Generator (43) elektrisch mit einer Stromrichterbaugruppe (44) verbunden ist, die von dem Tragrahmen (11) in dem Gehäusevolumen (15) getragen wird, wobei der elektrische Kompressormotor (24) von der Stromrichterbaugruppe (44) angetrieben wird;
und dass die Unterbau-Klimaanlage (10) ferner einen Wasserkühlkreislauf (54, 57) umfasst, der eine Kühlkörperbaugruppe (54), die thermisch mit der Stromrichterbaugruppe (44) gekoppelt ist, und eine Flüssigkeit-Luft-Austauscher (57) umfasst, wobei der Wasserkühlkreislauf von dem Tragrahmen (11) in dem Gehäusevolumen (15) getragen wird;
eine Lüfterbaugruppe (41), die auf dem Flüssigkeit-Luft-Austauscher (57) aktiv ist, um Luft auf den Flüssigkeit-Luft-Austauscher (57) zu bewegen.

2. Unterbau-Klimaanlage (10) nach Anspruch 1, wobei der Flüssigkeit-Luft-Austauscher (57) vor dem Kondensator (26) an einer äußersten Position des Gehäusevolumens (15) angeordnet ist; wobei die Lüfterbaugruppe (41) auch auf den Kondensator (26) wirkt.

3. Unterbau-Klimaanlage (10) nach Anspruch 1 oder 2, umfassend einen Motorkühler (36) zum Kühlen des Verbrennungsmotors (33), der von dem Tragrahmen (11) in dem Gehäusevolumen (15) getragen wird; wobei die Lüfterbaugruppe (41) auch auf den Motorkühler (36) wirkt.

4. Unterbau-Klimaanlage (10) nach Anspruch 3, wobei der Motorkühler (36) vor dem Kondensator (26) angeordnet ist.

5. Unterbau-Klimaanlage (10) nach einem der Ansprüche 3 und 4, wobei sich der Flüssigkeit-Luft-Austauscher (57) an einer äußersten Position des Gehäusevolumens (15) befindet, der Kondensator (26) an einer innersten Position des Gehäusevolumens (15) befindet und der Motorkühler (36) zwischen dem Kondensator (26) und dem Flüssigkeit-Luft-Austauscher (57) angeordnet ist, wobei die Lüfterbaugruppe (41) auch auf den Kondensator (26) wirkt.

6. Unterbau-Klimaanlage (10) nach einem der Ansprüche 3 und 4, bei der der Flüssigkeit-Luft-Austauscher (57) und der Motorkühler (36) nebeneinander oder vertikal übereinander angeordnet sind, wobei die Lüfterbaugruppe (41) auch auf den Kondensator (26) wirkt.

7. Unterbau-Klimaanlage (10) nach einem der Ansprüche 2 bis 6, wobei der Flüssigkeit-Luft-Austauscher (57), der Kondensator (26) und der Motorkühler (36) in einem gemeinsamen Gehäuse (37) montiert sind, das eine von einem Gitter (22) abgedeckte Entlüftungsöffnung (40) aufweist.

8. Unterbau-Klimaanlage (10) nach Anspruch 7, wobei die Lüfterbaugruppe (41) ein Paar Axialgebläse (42) umfasst, die nebeneinander am Gehäuse (37) auf einer in Bezug auf die Belüftungsöffnung (40) gegenüberliegenden Seite angebracht sind.

9. Unterbau-Klimaanlage (10) nach einem der vorhergehenden Ansprüche, wobei der Kompressor (23), der Kondensator (26), der Flüssigkeit-Luft-Austauscher (57), der Motorkühler (36) und die Lüfterbaugruppe (41) in einem ersten Abteil (32) des Gehäusevolumens (15) angeordnet sind und der Verbrennungsmotor (33) und der elektrische Generator (43) in einem zweiten Abteil (34) des Gehäusevolumens (15) angeordnet sind.

10. Unterbau-Klimaanlage (10) nach einem der vorhergehenden Ansprüche, wobei die Stromrichterbaugruppe (44) auf einem beweglichen Träger (58) montiert ist, wobei der bewegliche Träger (58) aus einer ersten Position, in der die Stromrichterbaugruppe (44) innerhalb des Gehäusevolumens (15) positioniert ist, und einer zweiten Position, in der die Stromrichterbaugruppe (44) zumindest teilweise außerhalb des Gehäusevolumens (15) positioniert ist, beweglich ist.

11. Unterbau-Klimagerät (10) nach einem der Ansprüche 9 und 10, wobei der bewegliche Träger (58) das erste Fach (32) vom zweiten Fach (34) trennt.

12. Unterbau-Klimaanlage (10) nach einem der vorhergehenden Ansprüche, wobei der elektrische Generator (43) direkt am Verbrennungsmotor (33) montiert ist; wobei sich der Verbrennungsmotor (33) und der elektrische Generator (43) eine gemeinsame Übertragungswelle teilen.

13. Unterbau-Klimaanlage (10) nach einem der vorhergehenden Ansprüche, wobei die Stromrichterbaugruppe (44) einen AC/DC-Gleichrichter (45), der elektrisch mit dem elektrischen Generator (43) verbunden ist, um einen von dem elektrischen Generator (43) erzeugten Wechselstrom in einen Gleichstrom umzuwandeln, und einen DC/AC-Wechselrichter (47) umfasst, der elektrisch mit dem AC/DC-Gleichrichter (45) verbunden ist, um den Gleichstrom in einen Wechselstrom umzuwandeln, der geeignet ist, den elektrischen Kompressormotor (24) anzutreiben.

14. Unterbau-Klimaanlage (10) nach Anspruch 13, wobei die Stromrichterbaugruppe (44) ferner einen DC/DC-Wandler (48) umfasst, der elektrisch mit dem AC/DC-Gleichrichter (45) verbunden ist, um den Gleichstrom in einen Gleichstrom umzuwandeln, der für die Stromversorgung der Lüfterbaugruppe (41) geeignet ist.

## Revendications

1. Unité de conditionnement encastrable (10) comprenant :
un cadre de support (11) définissant un volume de confinement (15) et configuré pour être fixé à un châssis de véhicule au niveau d'une position en dessous du véhicule ;
un moteur à combustion interne (33) supporté par le cadre de support (11) dans le volume de confinement (15) ;
un générateur électrique (43) entraîné par le moteur à combustion interne (33), le générateur électrique (43) étant supporté par le cadre de support (11) dans le volume de confinement (15) ;
un compresseur (23), comprenant un moteur de compresseur électrique (24), où le compresseur (23) est supporté par le cadre de support (11) dans le volume de confinement (15) ; un condenseur (26) en communication fluidique avec le compresseur (23) et supporté par le cadre de support (11) dans le volume de confinement (15) ;
**caractérisé en ce que** le générateur électrique (43) est connecté électriquement à un ensemble convertisseur de puissance (44) supporté par le cadre de support (11) dans le volume de confinement (15), le moteur de compresseur électrique (24) étant alimenté par l'ensemble convertisseur de puissance (44) ;
et **en ce que** l'unité de conditionnement encastrable (10) comprend en outre un circuit de refroidissement à eau (54, 57) comprenant un ensemble dissipateur thermique (54) couplé thermiquement à l'ensemble convertisseur de puissance (44) et à un échangeur air-liquide (57), le circuit de refroidissement à eau étant supporté par le cadre de support (11) dans le volume de confinement (15) ;
un ensemble ventilateur (41) actif sur l'échangeur air-liquide (57) pour déplacer l'air sur l'échangeur air-liquide (57).

2. Unité de conditionnement encastrable (10) selon la revendication 1, où l'échangeur air-liquide (57) est positionné en face du condenseur (26) au niveau d'une position la plus extérieure du volume de confinement (15) ; ledit ensemble ventilateur (41) étant également actif sur le condenseur (26).

3. Unité de conditionnement encastrable (10) selon la revendication 1 ou 2, comprenant un radiateur de moteur (36) pour refroidir le moteur à combustion interne (33) supporté par le cadre de support (11) dans le volume de confinement (15) ; ledit ensemble ventilateur (41) étant également actif sur ledit radiateur de moteur (36).

4. Unité de conditionnement encastrable (10) selon la revendication 3, où le radiateur de moteur (36) est positionné en face du condenseur (26).

5. Unité de conditionnement encastrable (10) selon les revendications 3 et 4, où l'échangeur air-liquide (57) est au niveau d'une position la plus extérieure du volume de confinement (15), le condenseur (26) est au niveau d'une position la plus intérieure du volume de confinement (15) et le radiateur de moteur (36) est positionné entre le condenseur (26) et l'échangeur air-liquide (57), ledit ensemble ventilateur (41) étant également actif sur le condenseur (26).

6. Unité de conditionnement encastrable (10) selon les revendications 3 et 4, où l'échangeur air-liquide (57) et le radiateur de moteur (36) sont positionnés côte à côte ou sont superposés l'un sur l'autre verticalement, ledit ensemble ventilateur (41) étant également actif sur le condenseur (26).

7. Unité de conditionnement encastrable (10) selon l'une quelconque des revendications de 2 à 6, où l'échangeur air-liquide (57), le condenseur (26) et le radiateur de moteur (36) sont montés dans un boîtier commun (37) ayant une ouverture de ventilation (40) couverte par une grille (22).

8. Unité de conditionnement encastrable (10) selon la revendication 7, où ledit ensemble ventilateur (41) comprend une paire de ventilateurs axiaux (42) montés côte à côte au niveau du boîtier (37) sur un côté opposé par rapport à l'ouverture de ventilation (40).

9. Unité de conditionnement encastrable (10) selon l'une quelconque des revendications précédentes, où le compresseur (23), le condenseur (26), l'échangeur air-liquide (57), le radiateur de moteur (36) et ledit ensemble ventilateur (41) sont positionnés dans un premier compartiment (32) dudit volume de confinement (15) et le moteur à combustion interne (33) et le générateur électrique (43) sont disposés dans un second compartiment (34) dudit volume de confinement (15).

10. Unité de conditionnement encastrable (10) selon l'une quelconque des revendications précédentes, où l'ensemble convertisseur de puissance (44) est monté sur un support mobile (58), le support mobile (58) étant mobile d'une première position, où l'ensemble convertisseur de puissance (44) est positionné dans le volume de confinement (15), et une seconde position, où l'ensemble convertisseur de puissance (44) est positionné au moins partiellement à l'extérieur du volume de confinement (15).

11. Unité de conditionnement encastrable (10) selon les revendications 9 et 10, où le support mobile (58) divise le premier compartiment (32) du second compartiment (34).

12. Unité de conditionnement encastrable (10) selon l'une quelconque des revendications précédentes, où le générateur électrique (43) est monté directement sur le moteur à combustion interne (33) ; le moteur à combustion interne (33) et le générateur électrique (43) partageant un même arbre de transmission.

13. Unité de conditionnement encastrable (10) selon l'une quelconque des revendications précédentes, où l'ensemble convertisseur de puissance (44) comprend un redresseur CA/CC (45) connecté électriquement au générateur électrique (43) pour convertir un courant CA généré par le générateur électrique (43) à un courant CC et un onduleur CC/CA (47) connecté électriquement au redresseur CA/CC (45) pour convertir le courant CC à un courant CA adapté pour alimenter le moteur de compresseur électrique (24).

14. Unité de conditionnement encastrable (10) selon la revendication 13, où l'ensemble convertisseur de puissance (44) comprend en outre un convertisseur CC/CC (48) connecté électriquement au redresseur CA/CC (45) pour convertir le courant CC à un courant CC adapté pour alimenter l'ensemble ventilateur (41).
